# FASCICULE DE BREVET EUROPEEN

(11) **EP 0 733 545 B1**
(45) Date de publication et mention de la délivrance du brevet: **23.05.2001**
(21) Numéro de dépôt: 96400570.6
(22) Date de dépôt: 19.03.1996
(51) Int. Cl.: B64D 27/00

(54) **Turboréacteur à double flux à nacelle flottante**
Turbofan-Triebwerk mit schwebender Gondel
Turbofan with a floating nacelle

(30) Priorité: 21.03.1995 FR 9503276
(43) Date de publication de la demande: 25.09.1996
(73) Titulaire: AEROSPATIALE Société Nationale Industrielle, 75781 Paris Cédex 16 (FR)
(72) Inventeur: Porte, Alain, 31770 Colomiers (FR); Ciprian, Danilo, 31840 Aussonne (FR)
(74) Mandataire: Dubois-Chabert, Guy

(56) Documents cités:
- EP-A- 0 070 578
- FR-A- 2 102 187
- FR-A- 2 379 433
- FR-A- 2 707 249
- GB-A- 744 473
- US-A- 5 174 525
- US-A- 5 205 513

## Description

### Domaine technique

L'invention concerne un turboréacteur à double flux, dans lequel la nacelle est supportée de façon flottante par le carter de soufflante, à proximité des bras reliant ce carter à la partie centrale du moteur.

L'invention s'applique à tous les turboréacteurs à double flux équipant des aéronefs.

### Etat de la technique

Dans un turboréacteur à double flux, la partie centrale du moteur comporte, de l'avant vers l'arrière, un compresseur, une chambre de combustion et une turbine haute pression entraînant le compresseur. Ces différents composants sont placés dans un carter central qui contient en outre, derrière la turbine haute pression, une turbine basse pression entraînant une soufflante placée à l'avant du compresseur. La soufflante est montée dans un carter de soufflante relié à la partie centrale du moteur par un ou deux jeux de bras orientés radialement par rapport à l'axe longitudinal de cette partie centrale. La soufflante crée ainsi un flux d'air secondaire dans un canal annulaire délimité entre le carter central et une nacelle qui entoure la partie centrale du moteur sur la majeure partie de sa longueur.

Les turboréacteurs à double flux sont suspendus à un élément de voilure de l'aéronef par un mât. C'est ce mât qui assure la transmission à la voilure de tous les efforts en provenance du moteur. Ainsi, le mât transmet à la voilure aussi bien les forces de poussée créées par le turboréacteur que les charges aérodynamiques et inertielles appliquées sur la nacelle par l'air environnant, notamment au décollage.

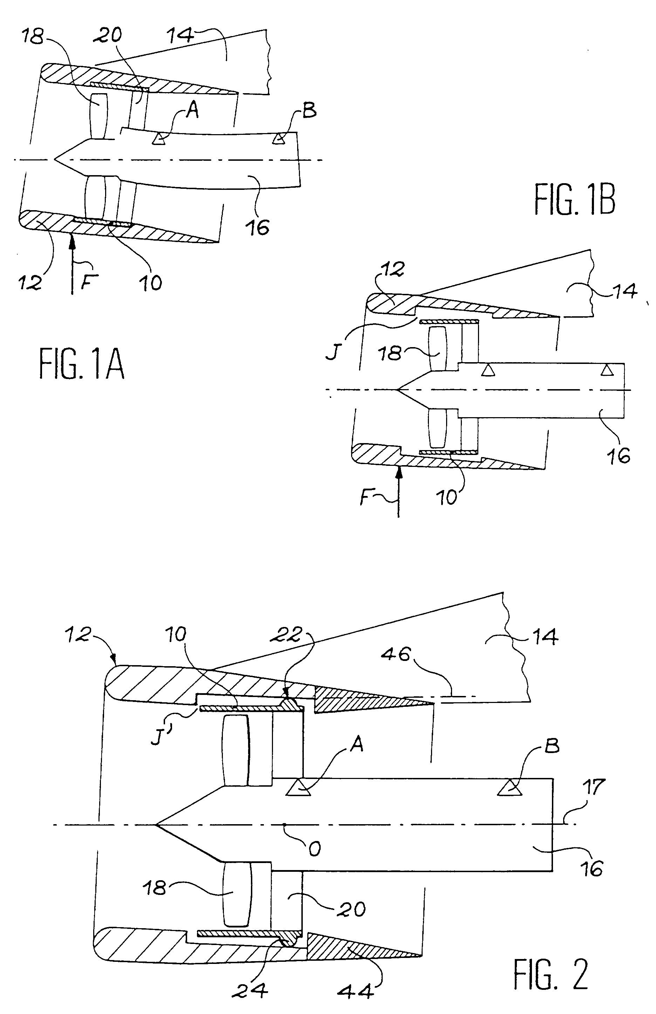

Dans les turboréacteurs à double flux existants, la structure est du type représenté de façon schématique sur la figure 1A. Comme l'illustre cette figure, le carter de soufflante 10 est fixé de façon rigide à la nacelle 12, de telle sorte que ces deux éléments se comportent comme une structure monobloc. Le transfert des charges entre le moteur et le mât 14 est généralement assuré par deux systèmes de biellettes interposés entre la partie centrale 16 non rotative du moteur et le mât 14. Ces deux systèmes de biellettes, qui sont décalés l'un par rapport à l'autre selon l'axe longitudinal de la partie centrale du moteur, sont représentés symboliquement par les triangles portant les références A et B sur la figure 1A.

Dans cette configuration existante, les charges aérodynamiques et inertielles qui sont appliquées sur la surface extérieure de la nacelle 12 à certains moments critiques du vol de l'aéronef, tels que le décollage, l'atterrissage et les changements de cap, se traduisent par des déformations comparables à celles qui ont été illustrées de façon volontairement exagérée sur la figure 1A. En effet, ces charges s'appliquent sur la surface extérieure de la nacelle 12 légèrement en avant de la soufflante 18 et sont orientées radialement vers l'intérieur du moteur comme l'illustre schématiquement la flèche F. Du fait que la transmission des efforts au mât 14 s'effectue en totalité par les systèmes de biellettes A et B, les charges F sont transmises de la nacelle 12 au carter de soufflante 10, puis de ce dernier à la partie centrale 16, non rotative, du moteur par les bras radiaux 20. Le moment de rotation ainsi appliqué sur la nacelle 12 a donc pour effet de déformer le carter de soufflante 10 ainsi que la partie centrale 16 en induisant une flèche autour des points d'appui constitués par les systèmes de biellettes A et B.

Cette déformation se traduit par une usure des extrémités des pales de la soufflante 18 et, dans une moindre mesure, des extrémités des pales du compresseur et des turbines logées dans la partie centrale 16. Cette usure a pour conséquence une augmentation irréversible des jeux entre les parties fixes et tournantes du moteur, qui conduit à une diminution du rendement de ce dernier. Ce phénomène est particulièrement sensible sur les pales de soufflante et d'autant plus important que le diamètre de la soufflante est élevé.

Il est à noter que ce phénomène d'usure dû aux déformations de la nacelle et du carter central des turboréacteurs à double flux sous l'effet des charges aérodynamiques et inertielles est pris en compte lors de la conception de ces moteurs. Cela impose notamment l'utilisation de matériaux susceptibles de s'user sans dommage lors des frottements induits par les déformations décrites précédemment.

Pour remédier à ces inconvénients communs à tous les turboréacteurs à double flux existants, on a proposé de dissocier le carter de soufflante 10 de la nacelle 12 et de fixer cette dernière directement sur le mât 14, comme l'illustre schématiquement la figure 1B. Dans cette configuration, les charges aérodynamiques et inertielles appliquées à la nacelle 12 sont transmises directement au mât 14 sans passer par le carter de soufflante 10 ni par la partie centrale 16. Par conséquent, ces charges n'induisent aucune déformation de ces carters. Le jeu entre les pales de la soufflante 18 et le carter de soufflante 10 peut donc être maintenu à des valeurs très faibles sans risque d'usure des pales par frottement.

Cependant, cette solution illustrée schématiquement sur la figure 1B entraîne des inconvénients qui n'existent pas dans la solution traditionnelle illustrée sur la figure 1A.

En premier lieu, les charges aérodynamiques et inertielles supportées par la nacelle 12 sont alors transmises à la partie avant du mât 14. Cependant, cette partie avant est une partie très effilée dont le profil a essentiellement pour fonction de limiter autant que possible les perturbations subies par l'air qui s'écoule entre le moteur et la voilure. Le renforcement structurel de la partie avant du mât 14 imposé par cette configuration risque donc d'entraîner des perturbations aérodynamiques préjudiciables au bon écoulement de l'air dans cette zone.

Par ailleurs, les déformations que subit la nacelle 12 sous l'effet des charges aérodynamiques et inertielles symbolisées par la flèche F sur la figure 1B se traduisent par un désalignement de l'entrée d'air constituant l'avant de la nacelle 12 par rapport au reste du moteur et notamment au carter de soufflante 10. Au moment où les charges appliquées sur la nacelle 12 sont maximales, ce désalignement peut entraîner la création d'un décalage radial J pouvant atteindre une dizaine de centimètres sur un moteur de grand diamètre, entre l'avant du carter de soufflante 10 et la partie adjacente de la nacelle 12. Ce décalage radial nécessite la présence dans cette zone d'un élément déformable apte à canaliser l'air tout en supportant les désalignements. Compte tenu de l'amplitude de ces désalignements, il apparaît très difficile de concevoir un élément d'étanchéité efficace, faiblement perturbant pour l'écoulement de l'air et dont la durée de vie soit satisfaisante. Compte tenu de l'amplitude de ces désalignements, il apparaît très difficile de concevoir un élément d'étanchéité efficace, faiblement perturbant pour l'écoulement de l'air et dont la durée de vie soit telle que de fortes perturbations de l'écoulement de l'air sont alors inévitables. Une perte de rendement du moteur est donc à prévoir.

Dans les documents US-A-5 205 513 et US-A-5 174 525, il est proposé de dissocier le carter de soufflante de la nacelle et de placer un accouplement coulissant entre ces deux pièces, dans un plan radial passant par les bras radiaux qui relient le carter de soufflante à la partie centrale du moteur. La partie arrière de la nacelle est reliée, par une autre série de bras radiaux, à une virole support qui appartient à la partie centrale du moteur. La nacelle et la virole support sont divisées en deux parties selon un plan horizontal et la partie supérieure est accrochée directement au mât. La partie inférieure est normalement fixée à la partie supérieure par des moyens de fixation démontables, permettant la dépose de la partie centrale du moteur.

Par conséquent, si l'agencement décrit dans ces documents US-A-5-205 513 et US-A-5 174 525 permet d'éviter que le jeu entre la soufflante et son carter soit affecté par les charges aérodynamiques et inertielles appliquées à la nacelle, la partie de ces charges qui n'est pas reprise par l'accouplement coulissant chemine jusqu'à la partie centrale du moteur, avant d'être reprise par le mât.

Par ailleurs, le document FR-A-2 102 187 décrit un moteur d'aéronef dont la partie centrale capotée, est supportée en totalité par le mât au travers de deux dispositifs de suspension, respectivement avant et arrière, un dispositif de maintien assurant en outre la reprise des efforts de poussée entre le capot de la partie centrale et le mât. Le dispositif de suspension avant comprend des bandages reliés fixement, d'une part au capot de la partie centrale par des aubes et, d'autre part, au mât par deux bielles formant un V dans un plan perpendiculaire à l'axe du réacteur.

Dans ce document, le moteur comprend également une nacelle liée au mât, vers l'arrière, par un joint à rotule et, vers l'avant, par un contact glissant. Des mécanismes d'espacement, interposés entre la nacelle et les bandages, transfèrent à ces derniers les efforts radiaux appliqués à l'avant de la nacelle, afin qu'ils soient ensuite transmis au mât par les bielles en V. Par ailleurs, un carter de soufflante est fixé aux bandages, par boulonnage.

### Exposé de l'invention

L'invention a pour objet un turboréacteur à double flux dont la conception originale permet d'éviter que le jeu entre la soufflante et son carter soit affecté par les charges appliquées sur la nacelle, sans qu'il existe aucun autre lien physique entre l'arrière de la nacelle et la partie centrale du moteur qu'une liaison rotulante située au droit des bras qui relient le carter de soufflante à cette partie centrale.

L'invention a aussi pour objet un turboréacteur à double flux dont la conception originale constitue un compromis satisfaisant entre la solution actuelle illustrée sur la figure 1A et la configuration qui vient d'être décrite en se référant à la figure 1B, afin notamment de permettre le maintien d'un jeu particulièrement faible entre la soufflante et son carter sans pour autant que la partie avant du mât n'ait à supporter des charges trop élevées, incompatibles avec le maintien d'un profil aérodynamique satisfaisant, et sans que le décalage radial entre l'avant du carter de soufflante et la partie adjacente de la nacelle n'excède 3 à 4 mm lorsque les charges aérodynamiques et inertielles appliquées sur cette dernière sont maximales.

Conformément à l'invention, ce résultat est obtenu au moyen d'un turboréacteur à double flux comprenant un ensemble tournant, incluant une soufflante, et un ensemble fixe, monté sur un mât d'accrochage du turboréacteur à un élément de voilure, cet ensemble fixe incluant une partie centrale, un carter de soufflante entourant la soufflante, au moins un jeu de bras reliant la partie centrale au carter de soufflante, et une nacelle entourant la partie centrale et séparée radialement du carter de soufflante par un jeu, la nacelle coopèrant avec le carter de soufflante uniquement par des moyens de centrage situés dans un plan placé à proximité des bras et orienté radialement par rapport à un axe longitudinal de la partie centrale, caractérisé par le fait qu'une partie arrière de la nacelle comporte deux capots articulés directement sur le mât et comportant un couteau reçu dans une gorge formée sur une partie intermédiaire de la nacelle, lorsque les capots sont fermés, de telle sorte que des efforts appliqués radialement sur la nacelle ont pour effet un mouvement rotulant limité de la nacelle par rapport au carter de soufflante, autour du point d'intersection dudit plan avec ledit axe longitudinal, et que les efforts non repris par les moyens de centrage sont transmis directement au mât sans passer par la partie centrale.

En supprimant la liaison rigide qui existe actuellement entre la nacelle et le carter de soufflante, l'invention permet d'éviter que les charges aérodynamiques et inertielles supportées par la nacelle dans certaines phases de vol n'induisent une déformation du carter de soufflante. Le jeu entre les pales de la soufflante et ce carter peut donc être maintenu à une valeur particulièrement faible, pratiquement sans risque de frottement ni d'usure, ce qui assure un rendement accru du moteur par rapport aux turboréacteurs à double flux existants.

Par ailleurs, en l'absence de toute autre liaison entre la nacelle et la partie centrale du moteur, les moyens de centrage par lesquels la nacelle coopère avec le carter de soufflante, à proximité des bras reliant ce dernier à la partie centrale du moteur, assurent un montage flottant de la nacelle sur cette partie centrale. Du fait de ce montage flottant, les déformations subies par la nacelle sous l'effet des charges aérodynamiques et inertielles se traduisent uniquement par un léger mouvement rotulant de la nacelle autour d'un point de l'axe longitudinal de la partie centrale situé dans un plan radial passant par les bras qui relient le carter de soufflante à la partie centrale ou à proximité immédiate d'un tel plan. Le décalage radial maximal induit par ce mouvement rotulant, entre l'avant du carter de soufflante et la partie adjacente de la nacelle, reste donc très faible, par exemple compris 3 et 10 mm pour un moteur de très grand diamètre.

Dans une première forme de réalisation de l'invention, les moyens de centrage comprennent au moins un organe flexible, sensiblement plan, orienté radialement par rapport à l'axe longitudinal de la partie centrale et reliant la nacelle au carter de soufflante.

Dans cette première forme de réalisation de l'invention, l'organe flexible peut être une couronne circulaire continue ou une couronne circulaire segmentée. Il peut aussi comprendre au moins deux bielles orientées selon une première direction moyenne sensiblement orthogonale à un plan médian du mât, passant par l'axe longitudinal de la partie centrale. L'organe flexible peut encore comprendre un ensemble de bielles régulièrement réparties autour de l'axe longitudinal de la partie centrale.

Dans le cas où l'organe flexible comprend des bielles, chacune d'entre elles peut comporter des moyens élastiques exerçant un effort de traction selon un axe longitudinal de cette bielle. Chaque bielle peut aussi être fixée sur la nacelle et sur le carter de soufflante par des liaisons à rotules.

Dans une deuxième forme de réalisation de l'invention, les moyens de centrage comprennent une bride formée directement sur le carter de soufflante et fixée sur la nacelle, par exemple par boulonnage.

Selon une troisième forme de réalisation de l'invention, les moyens de centrage comprennent des patins fixés sur l'une des pièces que constituent la nacelle et le carter de soufflante, ces patins étant en contact rotulant avec l'autre pièce.

Lorsque l'organe flexible est constitué par une couronne circulaire continue ou segmentée, ainsi que lorsque les moyens de centrage comprennent une bride boulonnée formée directement sur le carter de soufflante, des moyens stabilisateurs peuvent relier le mât à la nacelle. Ces moyens stabilisateurs permettent alors de transmettre au mât principalement des efforts exercés sur la nacelle dans un plan perpendiculaire à l'axe longitudinal de la partie centrale.

Dans le cas où l'organe flexible comprend un ensemble de bielles régulièrement réparties autour de l'axe longitudinal de la partie centrale, deux biellettes relient avantageusement le mât à la nacelle. Ces biellettes sont placées dans un plan orthogonal au plan médian du mât et parallèle à l'axe longitudinal de la partie centrale et elles sont disposées symétriquement par rapport au plan médian du mât.

Au moins une troisième biellette formant un angle avec le plan orthogonal précité peut aussi être placée dans le plan médian du mât, de façon à relier également le mât à la nacelle.

Pour faciliter l'assemblage, les biellettes sont avantageusement de longueur réglable.

Dans le cas où l'organe flexible comprend au moins deux bielles orientées selon une direction moyenne sensiblement orthogonale au plan médian du mât et dans le cas où les moyens de centrage comprennent des patins assurant un contact rotulant entre la nacelle et le carter de soufflante, des moyens de fixation peuvent relier directement la nacelle au mât.

Dans une première variante, la partie intermédiaire de la nacelle comporte des capots extérieurs articulés sur le mât et un carter de nacelle dans lequel est formée la gorge précitée et dont une extrémité arrière coopère avec le carter de soufflante par les moyens de centrage.

Selon une deuxième variante, la partie avant de la nacelle forme un caisson dans lequel est formée ladite gorge, et une extrémité arrière de ce caisson coopère avec le carter de soufflante par les moyens de centrage.

### Brève description des dessins

On décrira à présent, à titre d'exemples non limitatifs, différentes formes de réalisation de l'invention, en se référant aux dessins annexés, dans lesquels :
- la figure 1A, déjà décrite, représente de façon très schématique un turboréacteur à double flux existant ;
- la figure 1B, déjà décrite, est une vue comparable à la figure 1A illustrant un autre turboréacteur à double flux de l'état de la technique ;
- la figure 2 est une vue en coupe comparable aux figures 1A et 1B illustrant de façon très schématique un turboréacteur à double flux conforme à l'invention ;
- la figure 3 est une vue de côté, en coupe longitudinale partielle, représentant une première forme de réalisation d'un turboréacteur à double flux conforme à l'invention ;
- la figure 4 est une vue en coupe selon la ligne IV-IV de la figure 3 ;
- la figure 5 est une vue en coupe partielle prise selon la flèche V sur la figure 3 ;
- la figure 6 est une vue en coupe selon la ligne VI-VI de la figure 3 ;
- la figure 7 est une vue en coupe représentant à plus grande échelle un détail de réalisation du turboréacteur illustré sur les figures 3 à 6 ;
- la figure 8 est une vue comparable à la figure 3 représentant une deuxième forme de réalisation de l'invention ;
- la figure 9 est une vue en coupe selon la ligne IX-IX de la figure 8 ;
- la figure 10 est une vue en coupe comparable aux figures 1 et 8 illustrant une troisième forme de réalisation de l'invention ; et
- la figure 11 est une vue en coupe comparable aux figures 1, 8 et 10 illustrant une quatrième forme de réalisation de l'invention.

### Exposé - détaillé de formes de réalisation préférentielles

Comme on l'a représenté de façon très schématique sur la figure 2, le turboréacteur à double flux selon l'invention est réalisé de telle sorte qu'il n'existe pas de liaison rigide entre le carter de soufflante 10 et la nacelle 12. Toutefois, il existe entre ces deux structures des moyens de centrage 22 situés dans un plan orienté radialement par rapport à l'axe longitudinal 17 de la partie centrale 16 du moteur. En outre, ce plan radial coupe les bras 20 par lesquels le carter de soufflante 10 est relié à la partie centrale 16, ou est situé à proximité immédiate de ces bras.

La présence des moyens de centrage 22 entre la nacelle 12 et le carter de soufflante 10 est telle qu'il ne peut pratiquement pas exister de décalage radial entre l'axe longitudinal du carter de soufflante 10 et l'axe longitudinal 17 de la partie centrale 16 dans le plan radial précité. En revanche, les moyens de centrage 22 autorisent un léger mouvement rotulant de la nacelle 12 par rapport au carter de soufflante 10 autour d'un point O situé à l'intersection de l'axe longitudinal 17 de la partie centrale 16 avec le plan radial précité.

En assurant l'indépendance de la partie avant du carter de soufflante par rapport à la nacelle, cet agencement permet d'éviter que les déformations de cette dernière soient transmises au carter de soufflante. Par conséquent, le jeu entre les bouts de pales de la soufflante 18 et son carter 10 peut être minimal, ce qui assure un rendement maximal du moteur.

Il est à noter que les moyens de centrage 22 sont conçus de telle sorte que les charges aérodynamiques et inertielles, qui sont appliquées radialement sur la nacelle à l'avant du plan radial précité, sont transmises à la partie centrale 16 par les bras 20 principalement sous la forme d'efforts de traction-compression.

En outre, il n'existe aucun lieu physique entre l'arrière de la nacelle et la partie centrale du moteur. Par conséquent, les moyens de centrage 22 constituent un système rotulant entre la nacelle et le carter de soufflante.

Du fait que les charges aérodynamiques et inertielles qui sont appliquées à la nacelle 12 se traduisent uniquement par un mouvement rotulant de cette dernière autour du point O, le décalage radial J' qui se produit entre l'avant du carter de soufflante 10 et la partie adjacente de la nacelle 12 ne peut pas excéder quelques millimètres (par exemple, 3 à 10 mm) dans les conditions de charge les plus sévères sur un moteur de grand diamètre. Les perturbations aérodynamiques alors induites dans le flux d'air secondaire qui s'écoule entre la nacelle 12 et le carter central 16 restent donc extrêmement faibles.

Par ailleurs, dans la mesure où l'un A des systèmes d'accrochage A et B de la partie centrale 16 sur le mât 14 est situé dans le plan radial passant par le point O ou à proximité immédiate de ce plan, les charges aérodynamiques et inertielles supportées par la nacelle 12 ne créent pratiquement pas de déformation du carter central 16. Les jeux en bouts de pales dans le compresseur et dans les turbines du moteur peuvent donc être maintenus à des valeurs très faibles sans risque de frottement ni d'usure dans les conditions de charges aérodynamiques et inertielles maximales.

Dans la représentation schématique de la figure 2, les moyens de centrage 22 comprennent des patins 24, de section semi-circulaire, solidaires du carter de soufflante 10 et en contact rotulant avec une surface intérieure de la nacelle 12. Dans la pratique, cette solution a pour inconvénients de conduire à un accroissement de la masse du moteur d'autant plus grand que le diamètre de celui-ci augmente. En outre, elle impose une maintenance relativement fréquente et peu aisée à mettre en oeuvre. C'est pourquoi on lui préférera généralement les formes de réalisation qui vont à présent être décrites.

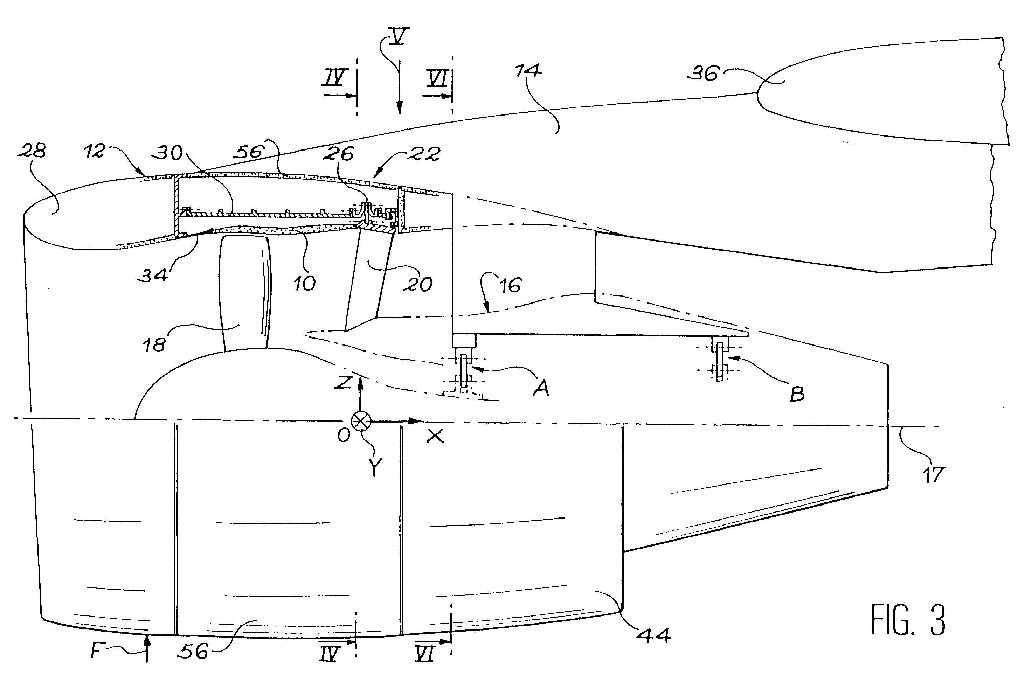

Dans une première forme de réalisation de l'invention illustrée sur les figures 3 à 7, les moyens de centrage 22 conformes à l'invention comprennent un ensemble de bielles 26 situées dans le plan radial passant par le point O et régulièrement réparties autour de l'axe longitudinal 17 de la partie centrale 16 du moteur. Plus précisément, les bielles 26 sont orientées radialement de telle sorte que leurs axes se coupent au point 0.

Dans l'exemple représenté sur les figures 3 à 7, la partie avant de la nacelle 12 comprend un caisson profilé 28 formant l'entrée d'air du turboréacteur. Ce caisson 28 est prolongé vers l'arrière par un carter de nacelle 30 qui entoure sur toute sa longueur le carter de soufflante 10, avec un jeu radial suffisant pour éviter que ces deux pièces ne viennent en contact l'une contre l'autre lors d'un mouvement rotulant de la nacelle 12 autour du point O, consécutif à l'application sur celle-ci de charges aérodynamiques et inertielles en cours de vol. Le carter de nacelle 30 est de forme cylindrique. Il présente une certaine flexibilité dans le sens radial, au moins dans sa partie arrière reliée au carter de soufflante 10 par les bielles 26. L'extrémité avant du carter de nacelle 30 est fixée par tout moyen approprié, par exemple par boulonnage, à l'arrière du caisson 28.

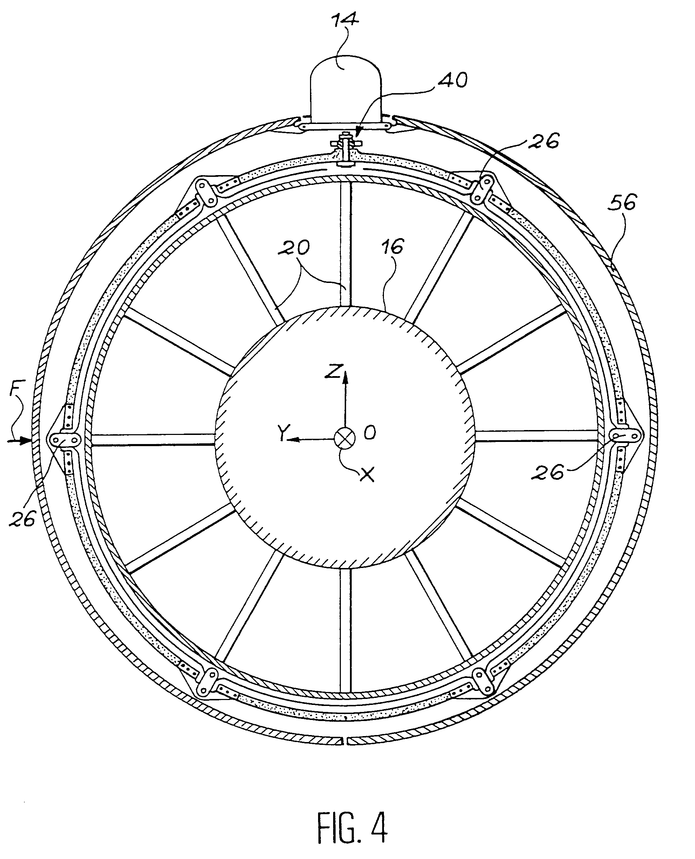

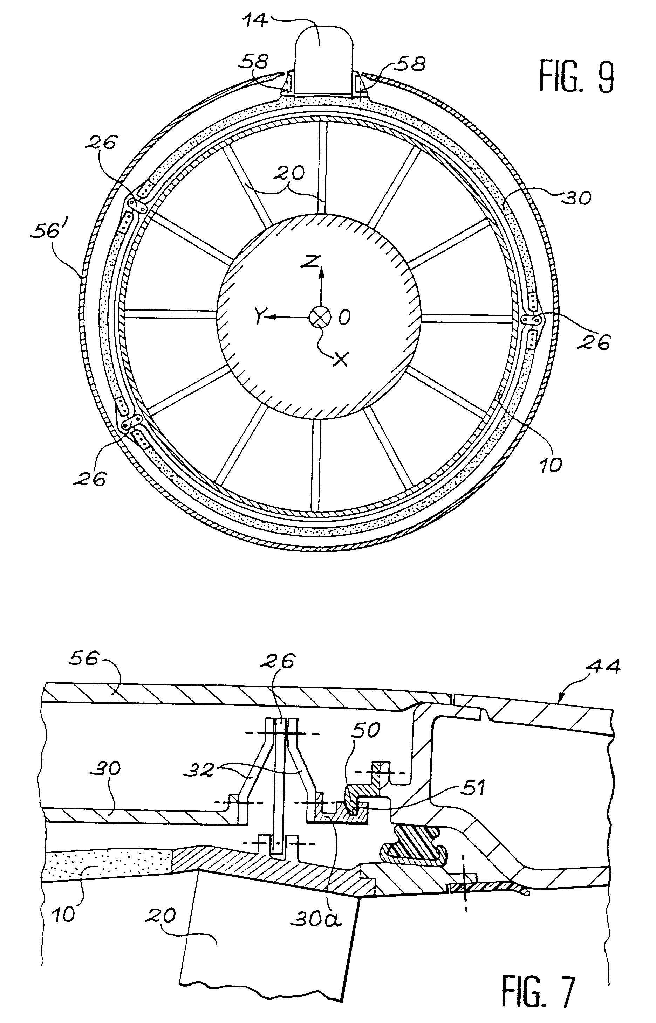

Comme l'illustrent notamment les figures 4 et 7, chacune des bielles 26 est orientée radialement par rapport à l'axe longitudinal 17 de la partie centrale 16. De plus, le plan radial contenant les bielles 26 coupe les bras 20 qui relient le carter de soufflante 10 à la partie centrale 16. Il est à noter qu'en variante, le plan radial contenant les bielles 26 pourrait être légèrement décalé parallèlement à l'axe longitudinal 17, par rapport aux bras 20, sans sortir du cadre de l'invention.

Dans l'exemple de réalisation représenté, chaque bielle 26 est une bielle rigide dont les extrémités sont fixées par des moyens de fixation appropriés tels que des boulons directement sur le carter de soufflante 10 et sur le carter de nacelle 30. Compte tenu de l'espace relativement faible qui existe entre ces deux carters, la fixation des bielles 26 sur le carter de nacelle 30 est de préférence réalisée par l'intermédiaire de supports d'ancrage 32 fixés, par exemple par boulonnage, sur une bride formée à l'extrémité arrière du carter de nacelle 30. Les extrémités externes des bielles 26 sont alors fixées sur les supports d'ancrage 32 en des emplacements décalés vers l'extérieur par rapport au carter de nacelle, comme l'illustrent les figures 4 et 7.

Dans des variantes de réalisation non représentées, les fixations des extrémités des bielles 26 sur chacun des carters 10 et 30 peuvent être remplacées par des liaisons à rotules. En outre, chacune des bielles peut incorporer un moyen élastique tel qu'un empilement de rondelles Belleville permettant d'exercer un effort de traction selon l'axe de la bielle entre ses points d'accrochage.

Pour faciliter la compréhension, on considère que le point O défini précédemment constitue l'origine d'un repère orthonormé OXYZ dont l'axe OX est porté par l'axe longitudinal 17 de la partie centrale 16 et orienté vers l'arrière. Les axes OY et OZ sont contenus dans le plan radial dans lequel sont placées les bielles 26 et orientés respectivement selon des directions horizontale et verticale.

Lorsque des charges aérodynamiques et inertielles sont appliquées radialement à l'avant de la nacelle 12, lors de certaines phases du vol, comme l'illustrent les flèches F sur les figures 3 et 4, les bielles 26 fléchissent dans le plan YOZ pour permettre un mouvement rotulant de la nacelle autour du point O. Il se produit alors un léger décalage radial entre l'avant du carter de soufflante 10 et l'arrière du caisson 28 formant l'entrée d'air du turboréacteur. Cependant, ce décalage n'excède pas quelques millimètres (par exemple 3 à 10 mm), de telle sorte que la perturbation du flux d'air secondaire qui s'écoule entre la partie centrale 16 et la nacelle 12 reste très faible. L'étanchéité et la continuité aérodynamique entre le caisson 28 et le carter de soufflante 10 peuvent donc être obtenues à l'aide de moyens d'étanchéité 34 de conception relativement simple, du fait que ces moyens d'étanchéité ne sont pas soumis à des déformations trop importantes.

Par ailleurs, et comme on l'a déjà mentionné, du fait qu'il n'existe pas de liaison rigide entre l'avant du carter de soufflante 10 et la nacelle 12, le mouvement rotulant de la nacelle autour du point O engendré par l'application de charges aérodynamiques et inertielles F est sans conséquence sur le carter de soufflante. Le jeu entre les extrémités des pales de la soufflante 18 et le carter de soufflante 10 peut donc être maintenu à une valeur très faible quelles que soient les conditions de vol. Un rendement maximal du moteur est ainsi garanti.

Lorsque des charges aérodynamiques et inertielles F sont appliquées sur la nacelle 12, ces charges sont transmises au mât 14 par lequel le moteur est suspendu à l'élément de voilure 36 (figure 3) successivement au travers du carter de nacelle 30, des bielles 26, des bras 20 et des structures non tournantes de la partie centrale 16. Lors de cette transmission des charges, il est à noter que les bielles 26 ne supportent principalement que des efforts de traction et de compression, ce qui garantit leur tenue mécanique.

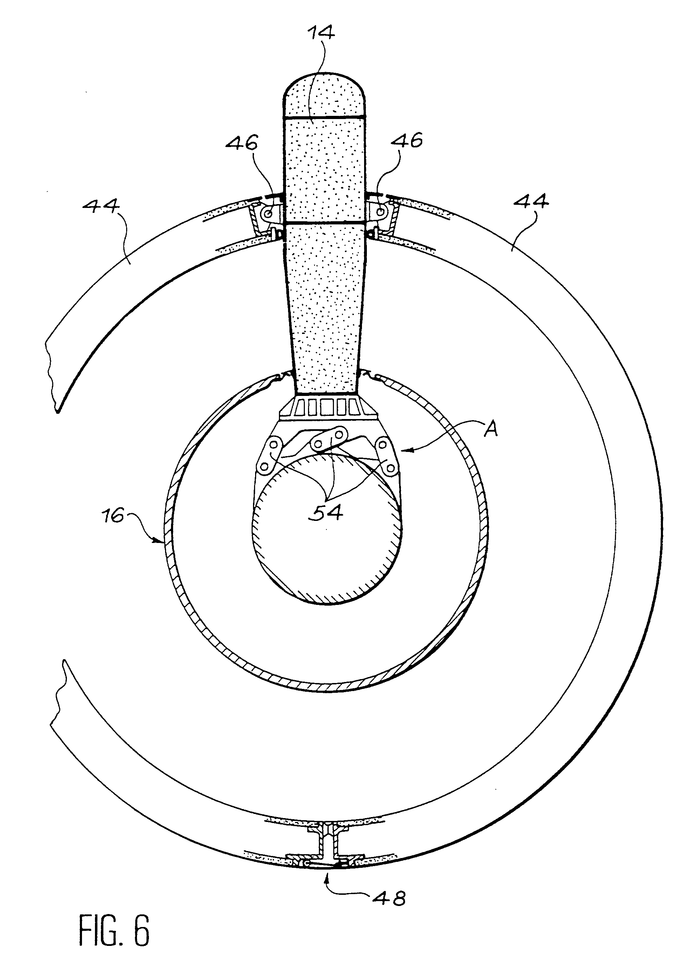

La transmission au mât 14 des charges appliquées aux parties non tournantes de la partie centrale 16 est assurée dans ce cas par deux systèmes de biellettes A et B, comme dans l'art antérieur. Ces systèmes de biellettes A et B sont illustrés de façon simplifiée sur la figure 3, pour faciliter la compréhension. L'un A de ces systèmes de biellettes est représenté sur la figure 6. Ce système, formé de trois biellettes 54, est situé en un emplacement aussi proche que possible du point O, généralement à l'arrière de ce point.

Il est à noter qu'en plus des avantages déjà mentionnés, l'invention permet de préserver le caractère effilé de la partie avant du mât 14. En effet, la transmission des efforts et des moments de rotation entre la nacelle 12 et le mât 14 est telle que ces efforts et ces moments sont appliqués sur le mât en arrière de sa partie avant.

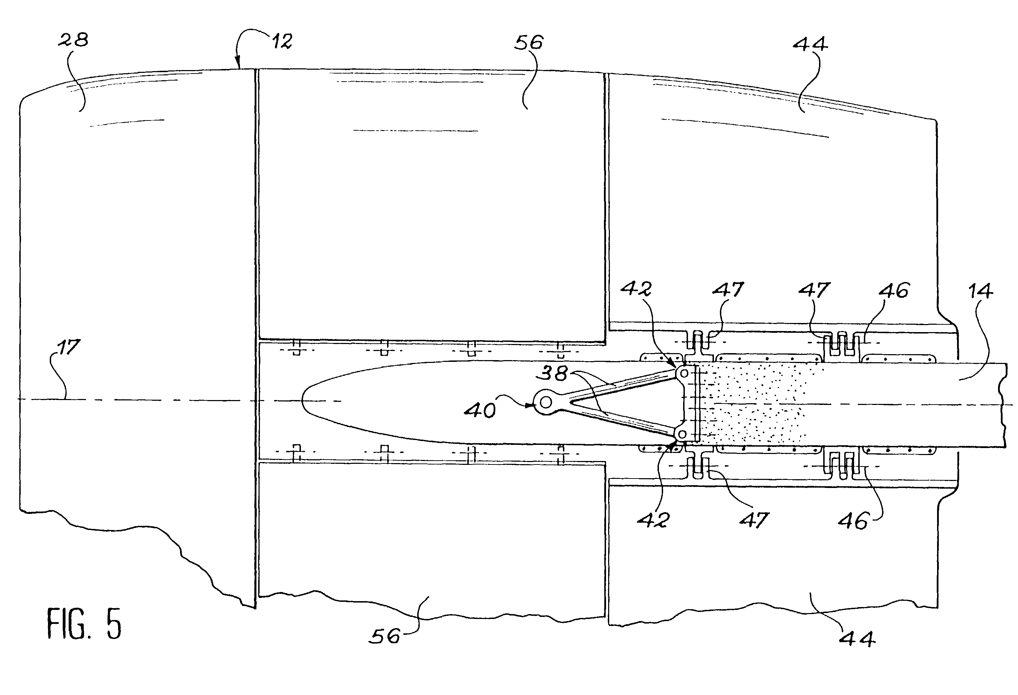

Dans la forme de réalisation illustrée sur les figures 3 à 7, la transmission au mât 14 des efforts appliqués sur la nacelle 12 selon l'axe OX est assurée par deux biellettes 38 (figure 5) qui relient directement le carter de nacelle 30 au mât 14. Ces biellettes 38 sont toutes deux disposées dans un plan horizontal, parallèle au plan OXY, et de façon symétrique par rapport au plan vertical OXZ qui constitue le plan médian du mât 14.

De façon plus précise, les extrémités avant des deux biellettes 38 sont toutes deux accrochées à l'arrière du carter de nacelle 30 par une même liaison à rotule 40 (figure 4) placée dans le plan vertical OXZ. Les extrémités arrière des biellettes 38 sont accrochées sur le mât 14 par deux liaisons à rotules distinctes 42 (figure 5) disposées de façon symétrique par rapport au plan vertical OXZ.

Il est à noter qu'en plus de leur rôle principal de transmission au mât des efforts appliqués sur la nacelle 12 selon l'axe OX, les biellettes 38 participent également à la transmission des efforts appliqués sur la nacelle 12 selon l'axe OY ainsi que des moments de rotation appliqués sur la nacelle autour de l'axe OX.

Enfin, la transmission au mât 14 des moments de rotation appliqués sur la nacelle 12 autour des axes Y et Z est assurée par deux capots 44 constituant la partie arrière de la nacelle 12, comme l'illustrent notamment les figures 5 et 6. Chacun de ces capots 44 présente en section la forme d'un demi-cercle et est articulé sur un côté du mât 14 à son extrémité supérieure, autour d'un axe 46 parallèle au plan XOY. Comme l'illustre en particulier la figure 5, chaque articulation est assurée par deux groupes de ferrures 47 décalés selon l'axe OX.

Lorsque les capots 44 sont fermés, leurs extrémités inférieures sont reliées l'une à l'autre par des moyens de verrouillage 48 (figure 6) qui peuvent prendre toute configuration appropriée.

Afin d'assurer la transmission au mât 14 des moments de rotation appliqués sur la nacelle 12 autour des axes OY et OZ, l'extrémité avant de chacun des capots articulés 44 porte un couteau 50 à section en forme de V qui pénètre dans une gorge 51 de forme complémentaire formée à l'arrière du carter de nacelle 30, comme l'illustre la figure 7. Dans l'exemple représenté, la gorge 51 est formée sur un prolongement 30a du carter de soufflante 30, fixé sur les supports d'ancrage 32.

Dans la première forme de réalisation de l'invention, la nacelle 12 comporte également, dans sa partie intermédiaire, deux capots extérieurs 56, également articulés sur le mât 14 et assurant la continuité aérodynamique de la surface extérieure de la nacelle 12 entre le caisson 28 et les capots articulés 44. Ces capots extérieurs 56 permettent dans ce cas d'accéder à des équipements implantés autour du carter de nacelle 30.

La structure qui vient d'être décrite en se référant aux figures 3 à 7 constitue un système mécanique pratiquement isostatique, dans lequel la transmission de chacun des efforts et des moments de rotation entre la nacelle 12 et le mât 14 s'effectue pratiquement selon un trajet unique. Ce caractère isostatique a pour conséquence des mouvements relatifs entre la nacelle 12 et l'avant du carter de soufflante 10 qui peuvent atteindre au maximum quelques millimètres (par exemple 3 à 10 mm), comme on l'a déjà indiqué.

Si l'on désire encore réduire ces mouvements relatifs, on donne au système mécanique un caractère hyperstatique d'autant plus élevé qu'une limitation de ces mouvements relatifs est souhaitée.

Une première étape dans ce sens (non représentée) consiste à adjoindre aux deux biellettes 38 qui relient directement le carter de nacelle 30 au mât 14, au moins une troisième biellette par laquelle une partie des efforts appliqués sur la nacelle 12 selon l'axe vertical OZ est transmise directement au mât 14. Cette troisième biellette est alors accrochée à son extrémité avant sur le carter de nacelle 30, par exemple par le système à rotule 40. L'extrémité arrière de cette troisième biellette est accrochée sur le mât 14 par un autre système à rotule situé dans le plan YOZ mais décalé vers le haut par rapport aux systèmes à rotules 40.

Pour faciliter l'assemblage du moteur, les biellettes 38, ainsi que les biellettes supplémentaires éventuelles, sont de préférence réglables en longueur.

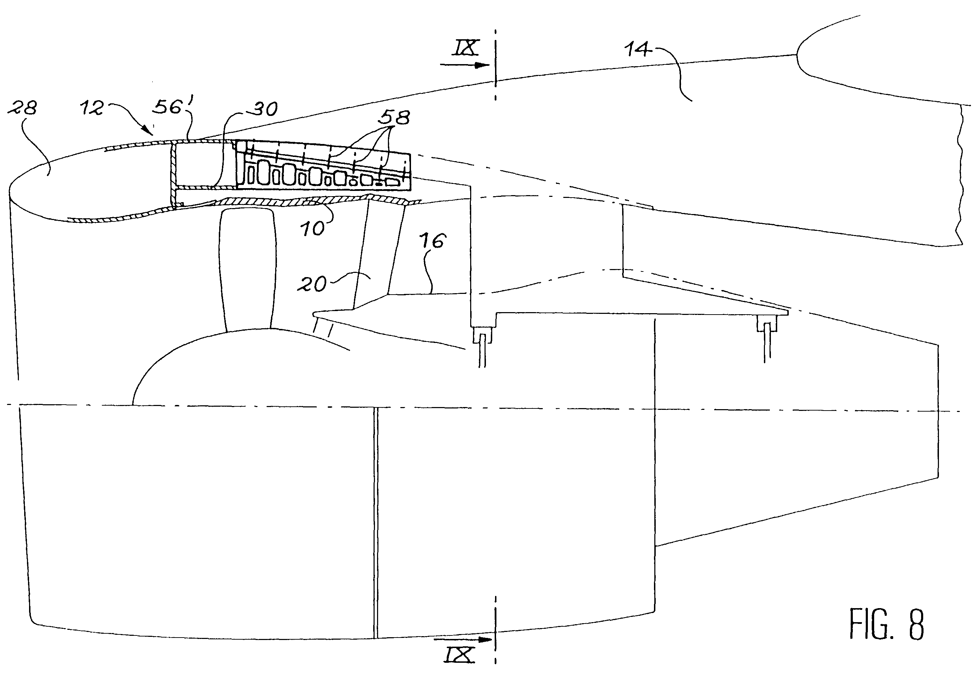

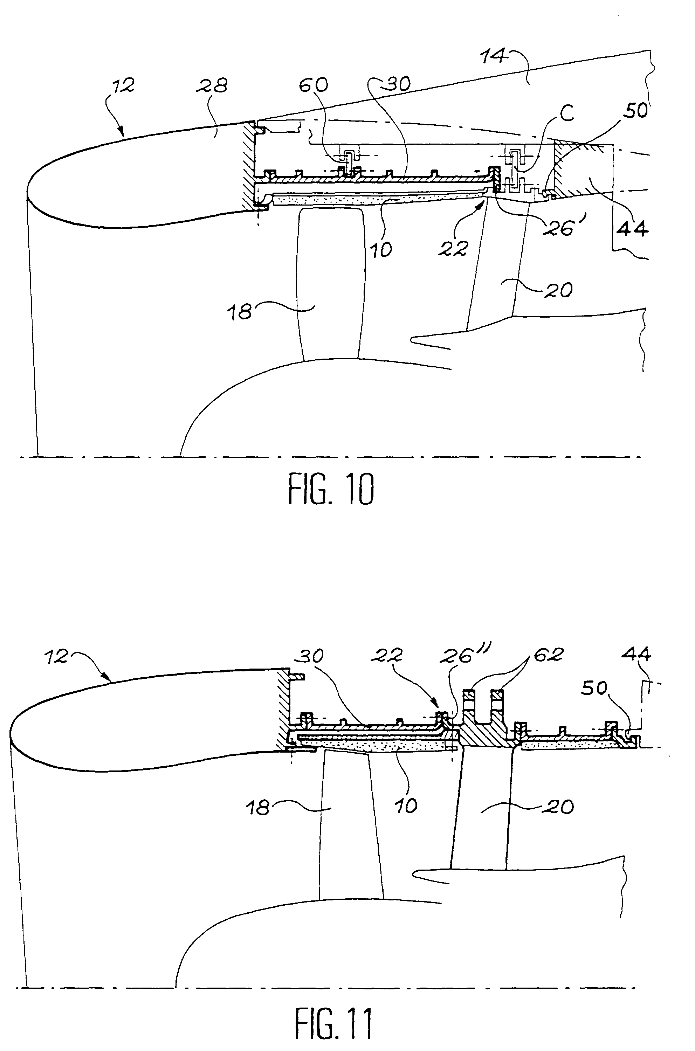

Dans une deuxième forme de réalisation de l'invention qui va à présent être décrite en se référant aux figures 8 et 9, le caractère hyperstatique des liaisons entre la nacelle et le mât est encore accentué.

Dans cette deuxième forme de réalisation de l'invention, les capots extérieurs 56 formant la partie intermédiaire de l'enveloppe extérieure de la nacelle 12 sont supprimés et remplacés par une enveloppe extérieure fixe 56' qui forme, avec le carter de nacelle 30, un prolongement vers l'arrière du caisson 28 constituant l'entrée d'air du turboréacteur.

Dans ce cas, seule une partie des bielles 26 reliant le carter de nacelle 30 à l'arrière du carter de soufflante 10 est conservée, comme l'illustre la figure 9. Les bielles 26, dont le nombre est alors compris entre 2 et 4 (3 dans l'exemple représenté) sont orientées selon une direction moyenne sensiblement confondue avec l'axe OY. Ainsi, dans l'exemple représenté, l'une des bielles 26 est orientée selon cet axe OY, alors que les deux autres bielles 26 sont disposées symétriquement par rapport à l'axe OY, en un emplacement diamétralement opposé par rapport à celui de la première bielle 26.

Les bielles 26 ont alors principalement pour fonction de transmettre à la partie centrale 16 du moteur les efforts appliqués sur la nacelle 12 selon la direction Y, au travers des bras 20.

Par ailleurs, les bielles 26 sont placées et orientées de la même manière que dans la première forme de réalisation, de façon à travailler en traction et en compression pour assurer la transmission des efforts et à autoriser un mouvement rotulant de la nacelle 12 autour du point O, sans déformation du carter de soufflante 10.

Etant donné que les efforts exercés sur la nacelle 12 selon la direction verticale Z ne sont que très partiellement transmis à la partie centrale 16 au travers des bielles 26, la rigidité de la liaison prévue par ailleurs entre la nacelle 12 et le mât 14 est plus élevée que dans la première forme de réalisation décrite. Cette liaison entre la nacelle 12 et le mât 14 doit en effet assurer au minimum la transmission au mât 14 des efforts exercés sur la nacelle selon les axes OX et OZ et des moments de rotation autour de l'axe OX. Dans la pratique, cette liaison peut être assurée par des moyens de fixation tel que des boulons 58 par lesquels le prolongement arrière du caisson, délimité entre le carter de nacelle 30 et l'enveloppe extérieure 56', est directement fixée de part et d'autre du mât 14.

Dans cette forme de réalisation des figures 8 et 9, la transmission au mât 14 des moments de rotation appliqués sur la nacelle 12 autour des axes OY et OZ est assurée comme dans la première forme de réalisation décrite par les capots articulés 44. Plus précisément, cette transmission est assurée par la coopération de couteaux 50 portés par ces capots 44 avec une gorge 51 à section en forme de V formée sur le prolongement arrière du caisson 28.

Dans une troisième forme de réalisation de l'invention illustrée sur la figure 10, appliquée à une nacelle dont la structure générale est analogue à celle de la première forme de réalisation décrite, les moyens de centrage 22 sont constitués non plus par un ensemble de bielles, mais par une couronne circulaire 26', continue ou segmentée. Cette couronne circulaire 26' constitue un organe flexible dans le plan radial YOZ, autorisant comme précédemment un mouvement rotulant de la nacelle 12 autour du point O sans déformation du carter de soufflante 10.

Dans ce cas, la liaison directe entre la nacelle 12 et le mât 14 peut être inexistante ou limitée à un stabilisateur 60 constitué par exemple par deux ou trois biellettes reliant le carter de nacelle 30 au mât 14. Ces biellettes peuvent notamment être situées entre la couronne circulaire 26' et le caisson avant 28 de la nacelle, dans un plan radial proche de la soufflante 18.

La forme de réalisation de la figure 10 se distingue par ailleurs des formes de réalisation précédemment décrites par le fait que les moyens d'accrochage de parties fixes du moteur au mât 14 ne sont plus constituées par les deux jeux de biellettes A et B, mais par exemple, par le jeu de biellettes B et par un jeu de biellettes C reliant directement le mât 14 à la partie arrière de l'enveloppe de soufflante 10 sur laquelle sont fixés les bras 20. Plus précisément, ce jeu de biellettes C est situé immédiatement en arrière de la couronne circulaire 26'.

La figure 11 illustre une quatrième forme de réalisation de l'invention. Pour faciliter la compréhension, le mât ainsi que les capots extérieurs de la nacelle 12 sont volontairement omis sur cette figure.

Comme les première et troisième formes de réalisation précédemment décrites, cette forme de réalisation de la figure 11 concerne le cas d'une nacelle 12 comprenant des capots extérieurs articulés sur le mât autour du carter de nacelle 30. Toutefois, il est également applicable, comme les autres formes de réalisation, au cas où les capots extérieurs 56 sont remplacés par une enveloppe extérieure fixe 56' (figures 8 et 9).

Dans cette quatrième forme de réalisation de l'invention, les moyens de centrage 22 qui relient l'extrémité arrière du carter de nacelle 30 au carter de soufflante 10 à proximité immédiate des bras 20 comprennent une bride 26", flexible dans le plan YOZ, formée directement dans le carter de soufflante 10 à proximité immédiate de la zone de raccordement des bras 20 sur ce carter. Cette bride 26" est boulonnée sur une bride complémentaire formée à l'extrémité arrière du carter de nacelle 30, comme l'illustre la figure 11.

Sur cette figure, on voit également que le carter de soufflante 10 est équipé, au-dessus des bras 20 et légèrement en arrière de la bride 26" d'une chape 62 permettant d'accrocher le moteur au mât à l'aide d'un système de biellettes comparable au système C sur la figure 10.

Bien entendu, l'invention n'est pas limitée aux formes de réalisation qui viennent d'être décrites. En particulier, elle couvre également les équivalents techniques des solutions décrites, ainsi que les combinaisons opérantes de ces solutions.

## Revendications

1. Turboréacteur à double flux comprenant un ensemble tournant, incluant une soufflante (18), et un ensemble fixe, monté sur un mât (14) d'accrochage du turboréacteur à un élément de voilure, cet ensemble fixe incluant une partie centrale (16), un carter de soufflante (10) entourant la soufflante, au moins un jeu de bras (20) reliant la partie centrale (16) au carter de soufflante (10), et une nacelle (12) entourant la partie centrale (16) et séparée radialement du carter de soufflante (10) par un jeu, la nacelle (12) coopérant avec le carter de soufflante (10) uniquement par des moyens de centrage (22) situés dans un plan placé à proximité des bras (20) et orienté radialement par rapport à un axe longitudinal de la partie centrale (16), caractérisé par le fait qu'une partie arrière de la nacelle (12) comporte deux capots (44) articulés directement sur le mât (14) et comportant un couteau (50) reçu dans une gorge (51) formée sur une partie intermédiaire de la nacelle (12), lorsque les capots sont fermés, de telle sorte que des efforts appliqués radialement sur la nacelle (12) ont pour effet un mouvement rotulant limité de la nacelle (12) par rapport au carter de soufflante (10), autour du point d'intersection dudit plan avec ledit axe longitudinal, et que les efforts non repris par les moyens de centrage (22) sont transmis directement au mât (14) sans passer par la partie centrale (16).

2. Turboréacteur selon la revendication 1, caractérisé par le fait que les moyens de centrage (22) comprennent au moins un organe flexible (26, 26'), sensiblement plan orienté radialement par rapport à l'axe longitudinal de la partie centrale (16), et reliant la nacelle (12) au carter de soufflante (10).

3. Turboréacteur selon la revendication 2, caractérisé par le fait que l'organe flexible est une couronne circulaire continue (26').

4. Turboréacteur selon la revendication 2, caractérisé par le fait que l'organe flexible est une couronne circulaire segmentée (26').

5. Turboréacteur selon la revendication 2, caractérisé par le fait que l'organe flexible comprend au moins deux bielles (26) orientées selon une première direction moyenne sensiblement orthogonale à un plan médian du mât (14), passant par l'axe longitudinal de la partie centrale (16).

6. Turboréacteur selon la revendication 2, caractérisé par le fait que l'organe flexible comprend un ensemble de bielles (26) régulièrement réparties autour de l'axe longitudinal de la partie centrale (16).

7. Turboréacteur selon l'une quelconque des revendications 5 et 6, caractérisé par le fait que chaque bielle (26) comporte des moyens élastiques exerçant un effort de traction selon un axe longitudinal de cette bielle.

8. Turboréacteur selon l'une quelconque des revendications 5 à 7, caractérisé par le fait que chaque bielle (26) est fixée sur la nacelle (12) et sur le carter de soufflante (10) par des liaisons à rotules.

9. Turboréacteur selon la revendication 1, caractérisé par le fait que les moyens de centrage (22) comprennent une bride (26") formée directement sur le carter de soufflante (10) et fixée sur la nacelle (12).

10. Turboréacteur selon la revendication 1, caractérisé par le fait que les moyens de centrage (22) comprennent des patins (24) fixés sur l'une des pièces que constituent la nacelle (12) et le carter de soufflante (10), ces patins étant en contact rotulant avec l'autre pièce.

11. Turboréacteur selon l'une quelconque des revendications 3, 4 et 9, caractérisé par le fait que des moyens stabilisateurs (60), aptes à transmettre principalement des efforts exercés dans un plan perpendiculaire à l'axe longitudinal de la partie centrale (16), relient le mât (14) à la nacelle (12).

12. Turboréacteur selon la revendication 6, caractérisé par le fait que deux biellettes (38) placées dans un plan orthogonal à un plan médian du mât (14) et parallèle à l'axe longitudinal de la partie centrale (16), et disposées symétriquement par rapport au plan médian du mât, relient le mât (14) à la nacelle (12).

13. Turboréacteur selon la revendication 12, caractérisé par le fait qu'au moins une troisième biellette formant un angle avec ledit plan orthogonal et placée dans le plan médian du mât (14), relie également le mât (14) à la nacelle (12).

14. Turboréacteur selon l'une quelconque des revendications 12 et 13, caractérisé par le fait que les biellettes (38) sont de longueur réglable.

15. Turboréacteur selon l'une quelconque des revendications 5 et 10, caractérisé par le fait que des moyens de fixation (58) relient directement la nacelle (12) au mât (14).

16. Turboréacteur selon l'une quelconque des revendications précédentes, caractérisé par le fait que la partie intermédiaire de la nacelle (12) comporte des capots extérieurs (56) articulés sur le mât et un carter de nacelle (30) dans lequel est formée ladite gorge (51) et dont une extrémité arrière coopère avec le carter de soufflante (10) par les moyens de centrage (22).

17. Turboréacteur selon l'une quelconque des revendications précédentes, caractérisé par le fait qu'une partie avant de la nacelle (12) forme un caisson dans lequel est formée ladite gorge (51) et dont une extrémité arrière coopère avec le carter de soufflante (10) par les moyens de centrage (22).

## Patentansprüche

1. Turbofan-Triebwerk mit einer ein Fan-Laufrad (18) umfassenden rotierenden Gruppe und einer feststehenden Gruppe, befestigt an einem Mast (14) zur Aufhängung des Triebwerks an einem Tragwerkelement, wobei diese feststehende Gruppe einen zentralen Teil (16), ein das Fan-Laufrad umgebendes Fan-Gehäuse (10), wenigstens einen Satz den zentralen Teil (16) mit dem Fan-Gehäuse (10) verbindender Stützrippen (20) und eine Gondel bzw. Verkleidung (12) umfasst, die den zentralen Teil (16) umgibt und die von dem Fan-Gehäuse (10) radial durch ein Spiel getrennt ist, wobei die Verkleidung (12) mit dem Fan-Gehäuse (10) nur durch Zentriereinrichtungen (22) zusammenwirkt, die in einer in der Nähe der Stützrippen befindlichen Ebene angeordnet und in Bezug auf eine Längsachse des zentralen Teils (16) radial ausgerichtet sind,
**dadurch gekennzeichnet,**
dass ein hinterer Teil der Verkleidung (12) zwei Abdeckhauben (44) umfasst, direkt am Mast (14) angelenkt und mit einem Messer (50) versehen, das in einer Rille (51), ausgebildet in einem Zwischenstück der Gondel bzw. Verkleidung (12), sitzt, wenn die Abdeckhauben geschlossen sind, so dass radial auf die Verkleidung (12) wirkende Kräfte sich in Bezug auf das Fan-Gehäuse als begrenzte Drehbewegung um den Schnittpunkt der genannten Ebene mit der genannten Längsachse auswirken, und dass die nicht durch die Zentriereinrichtungen (22) aufgenommenen Kräfte direkt auf den Mast (14) übertragen werden, ohne den zentralen Teil (16) zu durchlaufen.

2. Turbofan-Triebwerk nach Anspruch 1, dadurch gekennzeichnet, dass die Zentriereinrichtungen (22) wenigstens ein im Wesentlichen ebenes flexibles Organ (26, 26') umfassen, das in Bezug auf die Längsachse des zentralen Teils (16) radial ausgerichtet ist und die Gondel bzw. Verkleidung (12) mit dem Fan-Gehäuse (10) verbindet.

3. Turbofan-Triebwerk nach Anspruch 2, dadurch gekennzeichnet, dass das flexible Organ ein kontinuierlicher kreisförmiger Ring (26') ist.

4. Turbofan-Triebwerk nach Anspruch 2, dadurch gekennzeichnet, dass das flexible Organ ein segmentierter kreisförmiger Ring (26') ist.

5. Turbofan-Triebwerk nach Anspruch 2, dadurch gekennzeichnet, dass das flexible Organ wenigstens zwei Zwischenglieder (26) umfasst, ausgerichtet entsprechend einer zu einer Mittelebene des Masts (14) im Wesentlichen senkrechten ersten mittleren Richtung, die durch die Längsachse des zentralen Teils (16) verläuft.

6. Turbofan-Triebwerk nach Anspruch 2, dadurch gekennzeichnet, dass das flexible Organ eine Gruppe gleichmäßig um den zentralen Teil (16) herum verteilter Zwischenglieder (26) umfasst.

7. Turbofan-Triebwerk nach einem der Ansprüche 5 und 6, dadurch gekennzeichnet, dass jedes Zwischenglied (26) elastische Einrichtungen umfasst, die entsprechend einer Längsachse dieses Zwischenglieds eine Zugkraft ausüben.

8. Turbofan-Triebwerk nach einem der Ansprüche 5 bis 7, dadurch gekennzeichnet, dass jedes Zwischenglied (26) durch Dreh- bzw. Kugelgelenkverbindungen an der Gondel (12) und an dem Fan-Gehäuse (10) befestigt ist.

9. Turbofan-Triebwerk nach Anspruch 1, dadurch gekennzeichnet, dass die Zentriereinrichtungen (22) einen Flansch (26") umfassen, direkt am Fan-Gehäuse (10) ausgebildet und an der Gondel (12) befestigt.

10. Turbofan-Triebwerk nach Anspruch 1, dadurch gekennzeichnet, dass die Zentriereinrichtungen (22) Gleit- bzw. Kugelelemente (24) umfassen, befestigt an einem der Teile, die die Gondel (12) und das Fan-Gehäuse (10) bilden, wobei diese Gleit- bzw. Kugelelemente einen Rotationskontakt mit dem anderen Teil haben.

11. Turbofan-Triebwerk nach einem der Ansprüche 3, 4 und 9, dadurch gekennzeichnet, dass Stabilisierungseinrichtungen (60), die hauptsächlich Kräfte übertragen, die in einer zur Längsachse des zentralen Teils (16) senkrechten Ebene wirken, den Mast (14) mit der Gondel (12) verbinden.

12. Turbofan-Triebwerk nach Anspruch 6, dadurch gekennzeichnet, dass die beiden Zwischenglieder (38), in einer zu einer Mittelebene des Masts (14) senkrechten Ebene und parallel zur Längsachse des zentralen Teils (16) befindlich sowie symmetrisch angeordnet in Bezug auf die Mittelebene des Masts (14), diesen Mast mit der Gondel (12) verbinden.

13. Turbofan-Triebwerk nach Anspruch 12, dadurch gekennzeichnet, dass wenigstens ein drittes Zwischenglied, das einen Winkel mit der genannten rechtwinkligen Ebene bildet und in der Mittelebene des Masts (14) angeordnet ist, ebenfalls den Mast (14) mit der Gondel (12) verbindet.

14. Turbofan-Triebwerk nach einem der Ansprüche 12 und 13, dadurch gekennzeichnet, dass die Zwischenglieder (38) eine verstellbare Länge haben.

15. Turbofan-Triebwerk nach einem der Ansprüche 5 und 10, dadurch gekennzeichnet, dass Befestigungseinrichtungen (58) die Gondel (12) direkt mit dem Mast (14) verbinden.

16. Turbofan-Triebwerk nach einem der vorangehenden Ansprüche, dadurch gekennzeichnet, dass das Zwischenstück der Gondel (12) Außenabdeckhauben (56), die am Mast angelenkt sind, und ein Gondelgehäuse (30) umfasst, in dem die genannte Rille (51) ausgebildet ist und von dem ein hinteres Ende durch Zentriereinrichtungen (22) mit dem Fan-Gehäuse (10) zusammenwirkt.

17. Turbofan-Triebwerk nach einem der vorangehenden Ansprüche, dadurch gekennzeichnet, dass ein vorderes Ende der Gondel (12) eine Vertiefung bildet, in der die genannte Rille (51) ausgebildet ist und von der ein hinteres Ende durch die Zentriereinrichtungen (22) mit dem Fan-Gehäuse (10) zusammenwirkt.

## Claims

1. Fan jet engine incorporating a rotary assembly, including a fan (18), and a fixed assembly, mounted on a strut (14) for attaching the fan jet engine to a wing member, said fixed assembly including a central portion (16), a fan stator case (10) surrounding the fan, at least one set of arms (20) connecting the central portion (16) to the fan stator case (10), and a pod (12) surrounding the central portion (16) and radially separated from the fan stator case (10) by a gap, the pod (12) cooperating with the fan stator case (10) solely by centring means (22) located in a plane in the vicinity of the arms (20) and oriented radially with respect to a longitudinal axis of the central portion (16), which is characterized in that a rear portion of the pod (12) has two covers (44) directly articulated to the strut (14) and incorporating a knife (50) received in a groove (51) formed on an intermediate portion of the pod (12), when the covers are closed, so that forces applied radially to the pod (12) lead to a limited swivelling movement of said pod (12) with respect to the fan stator case (10), about the intersection point of said plane with said longitudinal axis, and the forces not taken up the centring means (22) are transmitted directly to the strut (14) without passing through the central portion (16).

2. Turbofan engine according to claim 1, characterized in that the centring means (22) incorporate at least one substantially planar, flexible member (26, 26') oriented radially with respect to the longitudinal axis of the central portion (16) and connecting the pod (12) to the fan stator case (10).

3. Turbofan engine according to claim 2, characterized in that the flexible member is a continuous, circular ring (26').

4. Turbofan engine according to claim 2, characterized in that the flexible member is a segmented, circular ring (26').

5. Turbofan engine according to claim 2, characterized in that the flexible member comprises at least two rods (26) oriented in accordance with a first mean direction substantially orthogonal to a median plane of the strut (14) passing through the longitudinal axis of the central portion (16).

6. Turbofan engine according to claim 2, characterized in that the flexible member comprises a system of rods (26) regularly distributed about the longitudinal axis of the central portion (16).

7. Turbofan engine according to either of the claims 5 and 6, characterized in that each rod (26) incorporates elastic means exerting a tensile stress along a longitudinal axis of said rod.

8. Turbofan engine according to any one of the claims 5 to 7, characterized in that each rod (26) is fixed to the pod (12) and to the fan stator case (10) by ball joints.

9. Turbofan engine according to claim 1, characterized in that the centring means (22) incorporate a flange (26") formed directly on the fan stator case (10) and fixed to the pod (12).

10. Turbofan engine according to claim 1, characterized in that the centring means (22) incorporate pads (24) fixed to one of the parts constituted by the pod (12) and the fan stator case (10), said pads being in swivelling contact with the other part.

11. Turbofan engine according to any one of the claims 3, 4 and 9, characterized in that stabilizing means (60) able to mainly transmit forces exerted in a plane perpendicular to the longitudinal axis of the central portion (16) connect the strut (14) to the pod (12).

12. Turbofan engine according to claim 6, characterized in that two links (38) placed in a plane orthogonal to a median plane of the strut (14) and parallel to the longitudinal axis of the central portion (16) and arranged symmetrically with respect to the median plane of the strut connect said strut (14) to the pod (12).

13. Turbofan engine according to claim 12, characterized in that at least one third link forming an angle with said orthogonal plane and placed in the median plane of the strut (14) also connects the strut (14) to the pod (12).

14. Turbofan engine according to either of the claims 12 and 13, characterized in that the links (38) have a regulatable length.

15. Turbofan engine according to either of the claims 5 and 10, characterized in that the fixing means (58) directly connect the pod (12) to the strut (14).

16. Turbofan engine according to any one of the preceding claims, characterized in that the intermediate portion of the pod (12) has outer covers (56) articulated to the strut and a pod case (30) in which is formed said groove (51) and whereof a rear end cooperates with the fan stator case (10) by centring means (22).

17. Turbofan engine according to any one of the preceding claims, characterized in that a front portion of the pod (12) forms a box in which is formed said groove (51) and whereof a rear end cooperates with the fan stator case (10) by centring means (22).
